# EUROPEAN PATENT SPECIFICATION

(11) **EP 3 736 615 B1**
(45) Date of publication and mention of the grant of the patent: **07.09.2022**
(21) Application number: 19305602.5
(22) Date of filing: 10.05.2019
(51) Int. Cl.: G02B 6/44, A47B 81/00, A47B 51/00

(54) **A CABINET AND A METHOD OF OPERATING SUCH A CABINET**
SCHRANK UND VERFAHREN ZUR BEDIENUNG SOLCH EINES SCHRANKS
ARMOIRE ET PROCÉDÉ DE FONCTIONNEMENT D'UNE TELLE ARMOIRE

(43) Date of publication of application: 11.11.2020
(73) Proprietor: Nexans, 92400 Courbevoie (FR)
(72) Inventor: ANDERSSON, Per-Erik, 51434 Tranemo (SE)
(74) Representative: Ipsilon

(56) References cited:
- WO-A1-2014/063493
- US-A- 4 702 536
- US-A1- 2008 085 093

## Description

### Technical Field

The present invention relates to a cabinet. More specifically, the present invention relates to a cabinet comprising a base plate, an insert and an openable cover, wherein the cabinet is operable between an open position and a closed position, and wherein the cover, at least in the closed position of the cabinet, is connected to the base plate to form an interior space for housing the insert. This type of cabinets is generally used as a connector cabinet, such as a cable cabinet or an optical fiber cabinet having an insert supporting a cassette for installation of cables, fibers or similar. One type of such cabinets is optical fiber splice cabinets having a splice cassette for installation of fibers. Alternatively, this type of cabinets can be used for a variety of different purposes, such as for installation of other electronic devices, computer components or for storing different types of objects. The present invention also relates to a method for operating such a cabinet.

### Background

There is a plurality of different types of cabinets in the prior art. One type of prior art cabinets comprises a base plate and a removable cover together forming an interior space for an insert supporting one or more objects. Such cabinets can be made of sheet metal, wherein e.g. the cover is formed with a front plate and side walls and a locking device is arranged to lock the cover to the base plate. Such cabinets are used for different purposes and it is also known to use such cabinets for supporting one or more cassettes, such as splice cassettes for splicing fibers or other types of connecting cassettes for connecting cables or similar. Documents US 2008/085093A1, WO2014/063493A1 and US4702536A disclose relevant prior art cabinets.

One problem with such prior art cabinets is that it is difficult to access the interior space of the cabinet, such as the insert or objects supported by the insert. For connector cabinets of prior art this results in difficult and labour-intensive installation of cables or fibers, which increase cost and also increase the risk of work-related injuries. Hence, there is a need for a more user-friendly cabinet, such as a connector cabinet.

### Summary

An object of the present invention is to mitigate, alleviate or eliminate one or more of the above-identified deficiencies or drawbacks of cabinets according to prior art and provide an improved cabinet and method of operating such a cabinet. The present invention results in improved access to objects inside the cabinet, such as a connector cassette or similar.

The present invention relates to a cabinet comprising a base plate, an insert and an openable cover, wherein the cabinet has an open position and a closed position, and wherein the cover, at least in the closed position of the cabinet, is connected to the base plate to form an interior space for housing the insert, wherein the base plate is arranged with a resiliently flexible locking arm for locking the cover to the base plate in the closed position of the cabinet, and the insert is movably connected to the base plate, wherein the insert is movable from a first position for storing inside the interior space of the cabinet to a projecting second position when the cabinet is in its open position, and wherein the locking arm is arranged to engage the insert to keep the insert in the second position. The combination of the movable insert and the locking arm for locking the cover to the base plate and also for supporting the insert in the projecting second position result in a cabinet wherein access of the insert is facilitated. Hence, the insert can be pulled or rotated to the projecting second position, such as an elevated or pulled-out position, to bring the insert or at least a portion thereof closer to a person for improved access. At the same time the invention results in a possibility to manufacture the cabinet in a simple and cost efficient manner.

The insert can be connected to the base plate through a rotatable connection, so that the insert is rotatable from the first position to the second position. This results in a simple and reliable connection for moving the insert from the first position to the projecting second position, wherein a portion of the insert is brought to a position which is more easily accessed by a person while providing a cabinet that is simple to manufacture.

The base plate with the locking arm can be formed in a single integrated piece of sheet metal. For example, the base plate can be arranged with holes for receiving lugs of the insert to form the rotatable connection between the base plate and the insert. Hence, the cabinet can be made of few parts, wherein the base plate can be manufactured by folding a single piece of sheet metal. Also the cover can be formed in a single integrated piece of sheet metal, e.g. by folding.

The locking arm can be biased towards the locking position and a position for keeping the insert in the second position. The locking arm can be biased to said position by an inherent resilient flexibility of the material, such as sheet metal, of the locking arm. Hence, the locking arm is efficiently holding the cover in place when the cabinet is in the closed position and can be arranged to automatically take a position for supporting or holding the insert in the projecting second position when the cabinet is in its open position and the insert has been moved to its projecting second position.

The base plate can be formed with opposite side flanges having a top edge for engaging a tab of the cover. Hence, this results in a simple and efficient structure for holding the cover in place against the base plate when the cabinet is in the closed position. It also provides for easy opening and closing of the cabinet. The base plate can also comprise a top flange.

The base plate can be provided with a sealing for sealing against the cover to provide a tight cabinet and thereby prevent debris, dust, liquid, etc. from entering the cabinet.

The cover comprises a front plate, a top wall and two opposite side walls, wherein the locking arm is arranged to extend across the top wall and engage the front plate in the closed position of the cabinet. The front plate and the side walls of the cover can comprise sealing flanges for engaging a bottom wall of the insert. The insert and/or the sealing flanges can be provided with a sealing to provide a tight cabinet and thereby prevent debris, dust, liquid, etc. from entering the cabinet.

The cover, such as the side walls, is formed with a hook according to the invention for engaging the base plate. Hence, this results in a simple and efficient structure for holding the cover in place against the base plate when the cabinet is in the closed position. It can also provide for easy opening and closing of the cabinet.

The insert can comprise an insert frame and a cassette, wherein the cassette is rotatable in relation to the insert frame. Hence, the insert frame can be moved to the projecting second position and then the cassette can be rotated out from the cassette frame, wherein improved access of the cassette is achieved. For example, the cabinet can be an electronic cabinet, such as a cable cabinet for connecting cables and fibers, wherein the cassette can be a connector cassette, such as a splice cassette.

The present invention also relates to a method of operating a cabinet according to claim 1 comprising a base plate, a cover and an insert, wherein the cover, at least in a closed position of the cabinet, is connected to the base plate to form an interior space for housing the insert, comprising the steps of
a) moving a resiliently flexible locking arm of the base plate from a locked position, in which it is locking the cover to the base plate, to an unlocked position,
b) removing the cover from the base plate,
c) moving the insert from a first position for storing inside the interior space of the cabinet to a projecting second position, and
d) bring the locking arm to engage the insert to keep the insert in the second position.

Further characteristics and advantages of the present invention will become apparent from the description of embodiments below, the appended drawings and the dependent claims.

### Brief Description of the Drawings

The invention will now be described more in detail with the aid of embodiments and with reference to the appended drawings, in which
Fig. 1 is a schematic perspective view showing a part of a base plate and a cover of a cabinet according to one embodiment and illustrating the cabinet in a partially open position,
Fig. 2 is a schematic perspective view showing a part of the cabinet according to one embodiment,
Fig. 3 is a schematic side view of a cabinet according to one embodiment showing the base plate and the cover of the cabinet, wherein the cover is connected and locked to the base plate and the cabinet is in a locked and closed position,
Fig. 4 is a schematic side view according to Fig. 3, showing the cover unlocked from the base plate wherein the cabinet is in an unlocked position,
Fig. 5 is a schematic side view of the cabinet of Figs. 3 and 4, showing opening of the cabinet, wherein the cover is partially removed from the base plate to reveal an insert of the cabinet,
Fig. 6 is a schematic side view of a part of the cabinet of Figs. 3-5, wherein the cover has been removed from the base plate and the insert is in a first position for storage,
Fig. 7 is a schematic side view of a part of the cabinet according to Fig. 6, wherein the insert is in a projecting second position for improved access,
Fig. 8 is a schematic side view of a part of the cabinet according to Fig. 7, wherein a cassette of the insert has been turned to a position for access, and
Fig. 9 is a schematic front view of the base plate according to one embodiment.

### Description of embodiments

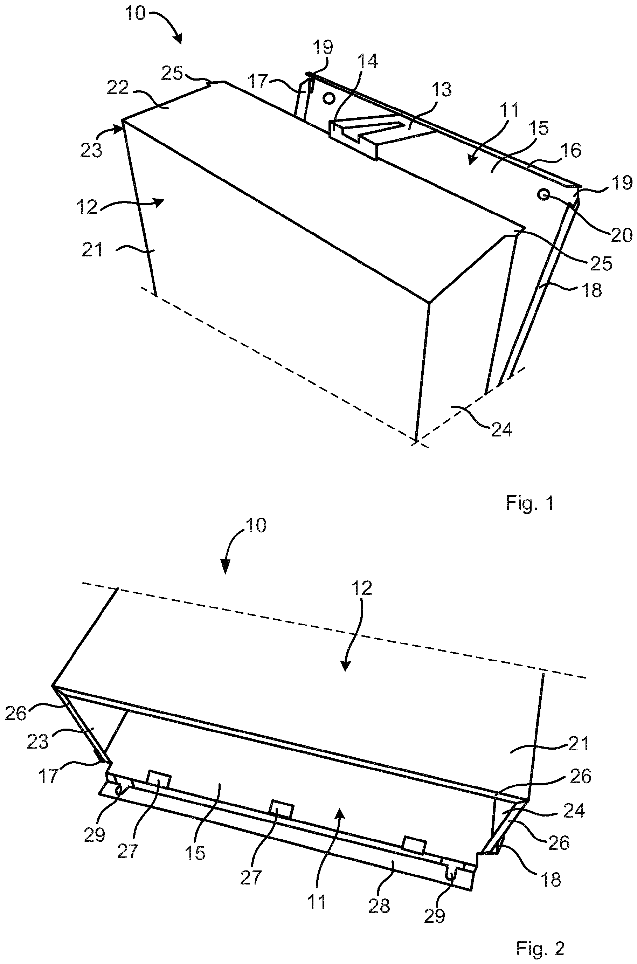

With reference to Fig. 1 a part of a cabinet 10 is illustrated according to one embodiment. The cabinet 10 is arranged for housing one or more objects (not illustrated in Fig. 1). In the described embodiments the cabinet 10 is a connector cabinet, such as a cable cabinet or an optical fiber cabinet. For example, the cabinet 10 is an optical fiber splice cabinet. Alternatively, the cabinet 10 is arranged for accommodating other types of objects, such as computer devices or other electronic devices. In the illustrated embodiments, the cabinet 10 is of rectangular shape.

The cabinet 10 comprises a base plate 11 and a cover 12. For example, the base plate 11 is arranged to be fastened to a wall, such as a building wall or a wall in a bigger cabinet, e.g. in the form of a street cabinet or similar. According to one embodiment, the cabinet 10 is arranged as a street cabinet. In an alternative embodiment, which is not illustrated in the drawings, the base plate 11 is arranged to be fastened to a stand or a rack or similar. For example, the base plate 11 is formed in metal, such as sheet metal. For example, the base plate 11 is formed in steel or aluminum. According to one embodiment, the base plate 11 is formed in a single integrated piece, e.g. by folding a single integrated piece of sheet metal. The thickness of the sheet metal is, e.g. from 0.4 to 2 mm. The sheet metal material may provide shielding properties, both for optical (light) and electrical (magnetic) applications.

The base plate 11 and the cover 12 together form an interior space for accommodating the one or more objects. The cover 12 is openable, wherein the cabinet 10 can be set in an open position, wherein the cover 12 is at least partially removed from the base plate 11, and a closed position, wherein the cover 12 is connected to the base plate 11 to form the interior space. For example, the cover 12 is removable from the base plate 11. The base plate 11 is arranged with a resiliently flexible locking arm 13 for locking the cover 12 to the base plate 11 when the cabinet 10 is in the closed position. For example, the locking arm 13 is made of sheet metal providing the resilient elastic properties of the locking arm 13. In the illustrated embodiment, the locking arm 13 is formed with a locking flange 14 for engaging the cover 12 and holding the cover 12 to the base plate 11 in the closed position.

In the illustrated embodiment, the base plate 11 comprises a back plate 15, a top flange 16, and opposite side flanges 17, 18. The top flange 16 and the side flanges 17, 18 extend along the periphery of the base plate 11 and extend substantially perpendicular to the back plate 15. The locking arm 13, the back plate 15, the top flange 16 and the side flanges 17, 18 are, e.g., formed by folding a single piece of sheet metal. For example, the base plate 11 is substantially rectangular. The top flange 16 and the side flanges 17, 18 extend along the sides of the base plate 11 leaving a gap 19 in each top corner. Optionally, the base plate 11 comprises openings 20 for mounting of the base plate 11 to a wall or similar.

According to the invention the cover 12 comprises a front plate 21, a top wall 22 and two opposite side walls 23, 24. The top wall 22 and the two opposite side walls 23, 24 extend substantially perpendicular from the front plate 21. For example, the cover 12 is formed in sheet metal, such as steel or aluminum, and is, e.g. formed in a single integrated piece. The cover 12 is formed with tabs 25 to be received in the gaps 19 of the base plate 11, wherein the tabs 25 are engaging top ends of the side flanges 17, 18 when the cover 12 is connected to the base plate 11 and the cabinet 10 is in the closed position. Hence, the tabs 25 are arranged for holding the cover 12 to the base plate 11 and, e.g. preventing the cover 12 from unintentional displacement in a direction downwards. According to one embodiment, the top ends of the side flanges 17, 18 are chamfered to guide the cover 12 into the gaps 19. For example, the cover 12 is arranged to be received within the top flange 16 and the side flanges 17, 18 when the cover 12 is connected to the base plate 11 and the cabinet 10 is in the closed position. In the closed position the locking arm 13 is arranged to extend across the top wall 22 and engage the front plate 21, which is described in more detail below.

With reference also to Fig. 2 the cover 12 is formed with sealing flanges 26 in an end opposite the top wall 22, which end for example is a bottom end. For example, the sealing flanges 26 are arranged in the front plate 21 and in one end of each of the side walls 23, 24. The sealing flanges 26 extend substantially perpendicular from the front plate 21 and the side walls 23, 24, respectively.

In the illustrated embodiment, the base plate 11 is formed with one or more holes 27. For example, the base plate 11 is formed with a plurality of holes 27, which, e.g. are aligned and distributed over a width of the back plate 15. For example, the base plate 11 is formed with at least two holes 27, such as three or more holes 27. In the embodiment of Fig. 2, the base plate 11 comprises a projecting edge portion 28, such as a bottom edge portion. For example, the edge portion 28 is substantially L-shaped and comprises a proximal portion extending perpendicular to the back plate 15 and a distal portion extending in a plane parallel to a plane of the back plate 15, wherein the proximal portion connects the distal portion to the back plate 15. In the illustrated embodiment, the plane of the back plate 15 is arranged between the plane of the distal portion of the edge portion 28 and a plane of the front plate 21 of the cover 12. The holes 27 are e.g. arranged adjacent the edge portion 28. In the illustrated embodiment, the distal portion of the edge portion 28 is formed with through apertures 29, such as key holes for fastening the base plate 11 to a wall or similar. According to one embodiment the side flanges 17, 18 of the base plate 11 are arranged for overlapping the side walls 23, 24 of the cover 12. For example, the side flanges 17, 18 of the base plate 11 are arranged for engaging the side walls 23, 24 of the cover 12.

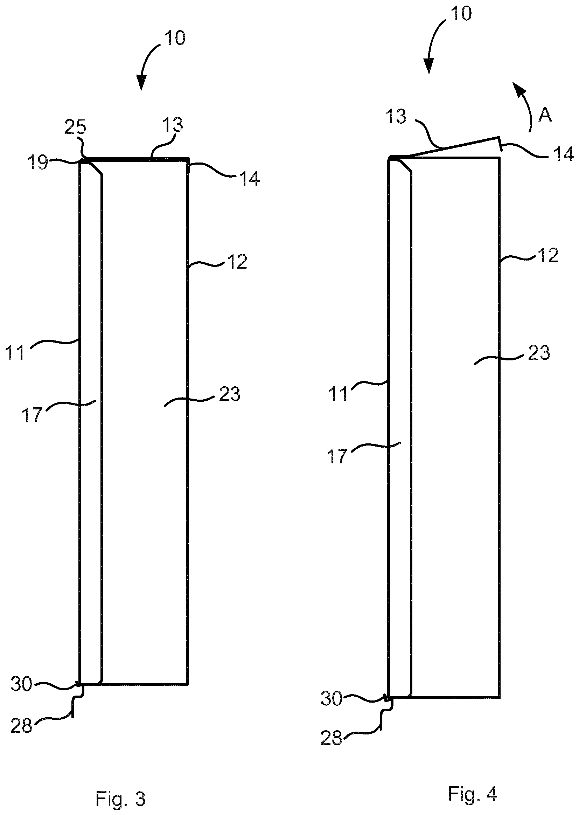

With reference to Figs. 3-6 opening of the cabinet 10 is illustrated schematically. In Fig. 3 the cabinet 10 is illustrated in a closed and locked position, wherein the locking arm 13 engages the cover 12 for locking thereof to the base plate 11. For example, an inner side of the top flange 16 engages an outer side of the top wall 22, wherein inner sides of the side flanges 17, 18 engages outer sides of the side walls 23, 24. In the illustrated embodiment, the cover 12 comprises hooks 30 for connecting the cover 12 to the base plate 11 in a side opposite the locking arm 13. For example, the hooks 30 are arranged in a bottom side of the cover 12. According to one embodiment, the hooks 30 are arranged in an end of the sealing flanges 26 of the side walls 23, 24, which sealing flanges 26 can be seen in Fig. 2. The hooks 29 are arranged to enclose an edge of the base plate 11, such as an edge of the back plate 15 adjacent the side flanges 17, 18. For example, the hooks 30 are arranged to engage a back side of the base plate 11 to prevent a bottom part of the cover 12 to be rotated out from the base plate when the cabinet 10 is in the closed position.

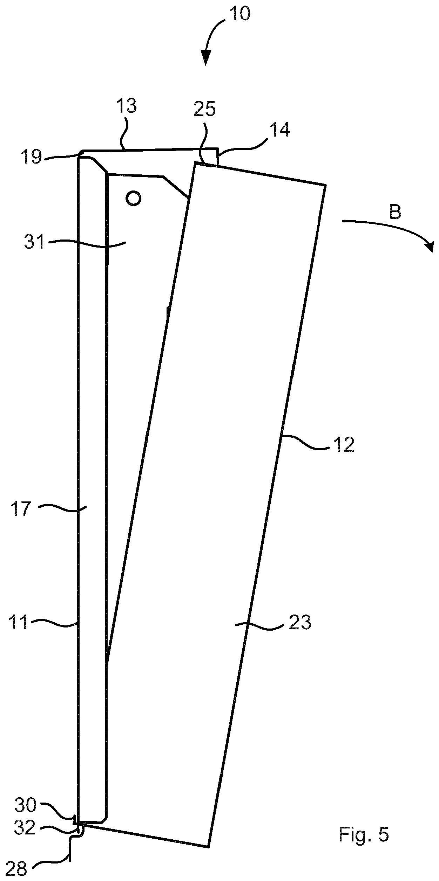

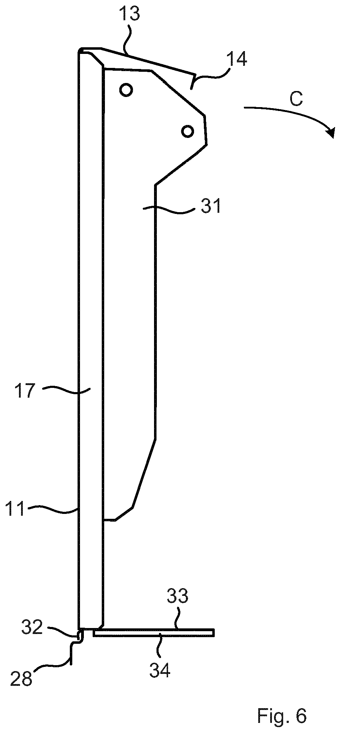

The locking arm 13 is movable from a locked position, as seen in Fig. 3, to an unlocked position, as seen in Fig. 4. The locking arm 13 is bendable at or rotatable around its connection to the remaining portions of the base plate 11 to move the locking arm 13 between the locked and unlocked positions. For example, the locking arm 13 is bendable at or rotatable around its connection to the top flange 16 or to the back plate 15. The locking arm 13 is bendable or rotatable and biased towards its locked position due to its inherent resilient flexible properties. To open the cabinet 10 the locking arm 13 is disengaged from the cover 12. For example, the locking flange 14 of the locking arm 13 is disengaged from the front plate 21 of the cover 12 by bending or rotating the locking arm 13 away from the cover 12 as illustrated by means of the arrow A in Fig. 4. For example, the locking arm 13 is configured to be operated manually by an operator. After unlocking the cabinet 10 by moving the locking arm 13 to the unlocked position, the cover 12 is rotated away from the base plate 11, which is illustrated by means of the arrow B in Fig. 5. For example, a top portion of the cover 12 is rotated away from the base plate 11, wherein the tabs 25 are disengaged from the base plate 11. When the tabs 25 are disengaged from the base plate 11, the hooks 30 can be disengaged and the cover 12 removed from the based plate 11. A schematic view where the cover 11 has been removed is illustrated in Fig. 6. According to the illustrated embodiment, the cover 12 is removed from the base plate 11 to set the cabinet 10 in the open position. Alternatively, the upper part of the cover 12 is rotated away from the upper part of the base plate 11, while the cover 12 is connected to the lower part of the base plate 11, e.g. by means of the hooks 30 cooperating with openings in the base plate 11.

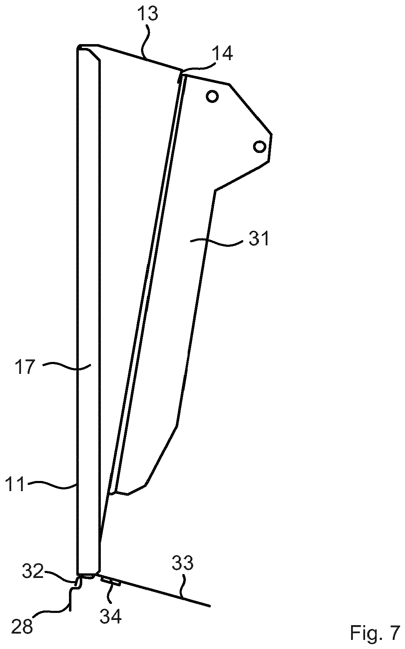

As illustrated in Figs. 5 and 6 and according to the invention, the cabinet 10 comprises an insert 31. The base plate 11 and the cover 12 are arranged for accommodating the insert 31. As seen in Figs. 6 and 7, the insert 31 is connected to the base plate 11. The insert 31 is movably connected to the base plate 11, wherein the insert 31 is movable from a first position as illustrated in Fig. 6 to a second position as illustrated in Fig. 7 in a direction illustrated schematically by means of the arrow C in Fig. 6. The first position is a storing position for storing inside the interior space of the cabinet 10. The second position is a projecting position for improved access for an operator, wherein at least a top portion of the insert 31 is pulled out from the base plate 11. For example, the insert 31 is connected to the base plate 11 through a rotatable connection, wherein the insert 31 is rotatable around an axis of rotation formed by the rotatable connection. In the illustrated embodiment, the insert 31 comprises lugs 32 arranged in the holes 27 of the base plate 11 to form the connection between the insert 31 and the base plate 11, such as the rotating connection. Said holes 27 are described above with reference to Fig. 2. For example, the lugs 32 are arranged in a bottom portion of the insert 31. The insert 31 may also be fastened to the base plate 11 by means of a removable screw, such as a single captive screw, e.g. in a top portion of the insert 31, which screw is removed to move the insert 31 to the second position. When the cabinet 10 is in its open position, e.g. when the cover 12 has been removed from the base plate 11, the insert 31 is movable from the retracted first position of Fig. 6 to the projecting second position of Fig. 7.

In the illustrated embodiment, the insert 31 comprises a bottom wall 33. For example, the bottom wall 33 is arranged to form a bottom wall of the cabinet 10 when the cabinet 10 is in its closed position. Hence, the bottom wall 33 is arranged for engaging the sealing flanges 26 of the cover 12. For example, an outer side of the bottom wall 33 and/or an inner side of the sealing flanges 26 is/are provided with a sealing to provide a tight sealing between the bottom wall 33 and the sealing flanges 26. In the illustrated embodiment, the bottom wall 33 is provided with a sealing 34 to provide a tight sealing between the bottom wall 33 and the sealing flanges 26 of the cover. In an alternative embodiment, the cover 12 is formed with a bottom wall instead of the insert 31 or in addition to the bottom wall 33 of the insert 31.

With reference particularly to Fig. 7 the locking arm 13 is arranged to engage the insert 31 when the insert 31 is in its projecting second position to support and maintain the insert 31 in the projecting second position and prevent it from unintentionally returning to the retracted first position of Fig. 6. In the illustrated embodiment, the locking arm 13 is arranged for engaging a back side of the insert 31 to keep it in the second position. For example, the locking flange 14 of the locking arm 13 is arranged for engaging the back side of the insert 31 when the insert 31 is in the second position. Alternatively, the locking arm 13 or the locking flange 14 thereof is arranged for cooperating with a recess in the insert 31 to hold the insert 31 in the second position. For example, the locking arm 13 is biased towards a position in which it engages the insert 31. For example, the locking arm 13 is biased, through its inherent resilient flexible properties, towards a locking position when the cabinet 10 is closed and towards a position for engaging the insert 31 when the insert 31 has been moved to its second position. According to one embodiment, the locking arm 13 is configured to automatically take a position for supporting the insert 31 after the insert 31 has been moved to its second position. For example, the insert 31 is arranged to be manually moved from the first to the second position by an operator.

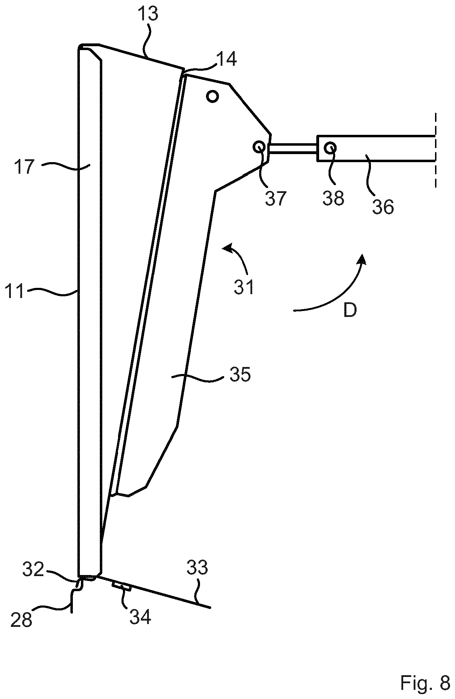

With reference also to Fig. 8 the insert 31 comprises an insert frame 35 and a cassette 36, wherein the cassette 36 is rotatable in relation to the insert frame 35, which is illustrated schematically by means of the arrow D in Fig. 8. Alternatively, the insert frame 35 is connected to another type of object, such as a computer device or other electronic or non-electronic device, in a similar rotatable manner. For example, the cassette 36 is a connector cassette for installation of cables or fibers. For example, the cassette 36 is a splice cassette for installation of optical fibers. Hence, the cassette 36 is connected to the insert frame 35 through a rotatable joint 37, so that the cassette 36 can be rotated around said joint 37 from a first position for storage to a projecting second position for access. For example, the rotatable joint 37 is arranged so that the cassette 36 is rotatable around an axis extending in parallel to an axis of rotation of the insert 31. For example, the axis of rotation of the insert 31 is horizontal, wherein the axis of rotation of the cassette 36 is displaced vertically in relation to the axis of rotation of the insert 31. For example, the axis of rotation of the insert 31 is arranged in a bottom part of the insert 31, wherein the axis of rotation of the cassette 36 is arranged in a top portion or in the vicinity of the top portion of the insert 31. In the illustrated embodiment, the insert 31 is rotatable outwards and downwards from the base plate 11, wherein the cassette 36 is rotatable outwards and upwards from the insert frame 35. According to Fig. 8 the cassette 36 is connected to the insert frame 35 also through another rotatable joint 38, which e.g. has an axis of rotation in parallel with the other rotatable joint 37.

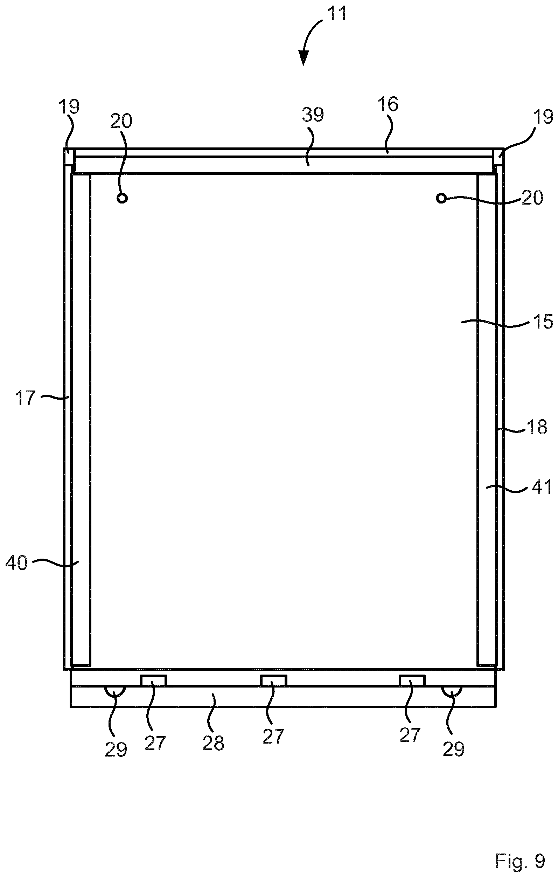

With reference to Fig. 9 the base plate 11 is illustrated schematically according to one embodiment. The baseplate 11 comprises the top flange 16 and the side flanges 17, 18 for overlapping and optionally engaging the top wall 22 and side walls 23, 24 of the cover 12 as described above. The base plate 11 is also formed with the gaps 19 between the top flange 16 and the side flanges 17, 18 for receiving the tabs 25 of the cover 12 as described above. For example, the base plate 11 is rectangular. In the embodiment of Fig. 9 the base plate 11 is provided with a top sealing 39, a first side sealing 40 and a second side sealing 41 to provide a tight sealing against the cover 12. The top sealing 39 is arranged for engaging the top wall 22 of the cover 12, wherein the first side sealing 40 and the second side sealing 41 are arranged for engaging the side walls 23, 24 of the cover 12. The top sealing 39 is arranged along the top flange 16. For example, the top flange 16 is arranged on the inner side of the top flange 16. Alternatively, the top sealing 39 is arranged on the back plate 15 adjacent the top flange 16. Similarly, the side sealings 40, 41 are arranged on the side walls 23, 24 or on the back plate 15 along and adjacent to the side walls 23, 24. For example, the sealings 39-41 are arranged to provide a sealing also in the gaps 19.

In an alternative embodiment, not illustrated in the drawings, the cover 12 is hinged to a side of the base plate 11. Hence, after unlocking the locking arm 13, the cover is then arranged to be turned to the side, wherein the insert 31 can be rotated out to rest on the locking arm 13 as described above.

In yet another alternative embodiment, the base plate 11 is arranged to be positioned horizontally, wherein the locking arm 13 is arranged in a part of the cabinet remote from an operator access point. For example, one or more such cabinets 10 is/are arranged horizontally in a rack.

## Claims

1. A cabinet (10) comprising a base plate (11), an insert (31) and an openable cover (12), wherein the cabinet (10) has an open position and a closed position, and wherein the cover (12), at least in the closed position of the cabinet (10), is connected to the base plate (11) to form an interior space for housing the insert (31),
***characterised* in that**
the base plate (11) is arranged with a resiliently flexible locking arm (13) for locking the cover (12) to the base plate (11) in the closed position of the cabinet (10), and
the insert (31) is movably connected to the base plate (11), wherein the insert (31) is movable from a first position for storing inside the interior space of the cabinet (10) to a projecting second position when the cabinet (10) is in its open position, and wherein the locking arm (13), in the open position of the cabinet (10), is arranged to engage the insert (31) to keep the insert in the second position,
wherein the cover (12) comprises a front plate (21), a top wall (22) and two opposite side walls (23, 24), wherein the locking arm (13) is arranged to extend across the top wall (22) and engage the front plate (21) in the closed position of the cabinet (10), and wherein the side walls (23, 24), in an end remote to the top wall (21), comprise a hook (30) for engaging the base plate (11).

2. A cabinet according to claim 1, wherein the insert (31) is connected to the base plate (11) through a rotatable connection, so that the insert (31) is rotatable from the first position to the second position.

3. A cabinet according to claim 2, wherein the base plate (11) is arranged with holes (27) for receiving lugs (32) of the insert (32) to form the rotatable connection between the base plate (11) and the insert (31).

4. A cabinet according to any of the preceding claims, wherein the locking arm (13) is biased towards the locking position and a position for keeping the insert (31) in the second position.

5. A cabinet according to any of the preceding claims, wherein the base plate (11) with the locking arm (13) is formed in a single integrated piece of sheet metal.

6. A cabinet according to any of the preceding claims, wherein the base plate (11) comprises opposite side flanges (17, 18) having a top edge for engaging tabs (25) of the cover (12).

7. A cabinet according to any of the preceding claims, wherein the base plate (11) comprises a top flange (16).

8. A cabinet according to any of the preceding claims, wherein the base plate (11) is provided with a sealing (39-41) for sealing against the cover (12).

9. A cabinet according to any of the preceding claims, wherein the cover (12) is detachably attachable to the base plate (11).

10. A cabinet according to claim 9, wherein the front plate (21) and the side walls (23, 24) of the cover (12) comprise a sealing flange (26) for engaging the insert (31).

11. A cabinet according to any of the preceding claims, wherein the cover (12) is formed in a single integrated piece of sheet metal.

12. A cabinet according to any of the preceding claims, wherein the insert (31) comprises an insert frame (35) and a cassette (36), wherein the cassette (36) is rotatable in relation to the insert frame (35).

13. A method of operating a cabinet (10) according to claim 1 comprising a base plate (11), a cover (12) and an insert (31), wherein the cover (12), at least in a closed position of the cabinet (10), is connected to the base plate (11) to form an interior space for housing the insert (31), comprising the steps of
a) moving a resiliently flexible locking arm (13) of the base plate (11) from a locked position, in which it is locking the cover (12) to the base plate (11), to an unlocked position,
b) at least partially removing the cover (12) from the base plate (11),
c) moving the insert (31) from a first position for storing inside the interior space of the cabinet (10) to a projecting second position, and
d) bring the locking arm (13) to engage the insert (31) to keep the insert (31) in the second position.

14. A method according to claim 13, comprising the steps of rotating the insert (31) from the first position to the second position around a rotatable connection between the insert (31) and the base plate (11).

## Patentansprüche

1. Schrank (10), umfassend eine Basisplatte (11), einen Einsatz (31) und eine zu öffnende Abdeckung (12), wobei der Schrank (10) eine offene Position und eine geschlossene Position aufweist, und wobei die Abdeckung (12) mindestens in der geschlossenen Position des Schranks (10) mit der Basisplatte (11) verbunden ist, um einen Innenraum zur Aufnahme des Einsatzes (31) zu bilden,
**dadurch gekennzeichnet, dass**
die Basisplatte (11) mit einem elastisch flexiblen Verschlussarm (13) angeordnet ist, um die Abdeckung (12) an die Basisplatte (11) in der geschlossenen Position des Schranks (10) zu befestigen, und
der Einsatz (31) beweglich mit der Basisplatte (11) verbunden ist, wobei der Einsatz (31) aus einer ersten Position zum Speichern innerhalb des Innenraums des Schranks (10) in eine vorstehende zweite Position bewegt werden kann, wenn sich der Schrank (10) in seiner offenen Position befindet, und wobei der Verschlussarm (13) in der offenen Position des Schranks (10) angeordnet ist, um den Einsatz (31) einzugreifen, um den Einsatz in der zweiten Position zu halten,
wobei die Abdeckung (12) eine vordere Platte (21), eine obere Wand (22) und zwei einander gegenüberliegende Seitenwände (23, 24) umfasst, wobei der Verschlussarm (13) angeordnet ist, um sich über die obere Wand (22) zu erstrecken und die vordere Platte (21) in der geschlossenen Position des Schranks (10) einzugreifen, und wobei die Seitenwände (23, 24) in einem Ende, das entfernt von der oberen Wand (21) ist, einen Haken (30) umfassen, um die Basisplatte (11) einzugreifen.

2. Schrank nach Anspruch 1, wobei der Einsatz (31) mit der Basisplatte (11) durch eine drehbare Verbindung verbunden ist, so dass der Einsatz (31) aus der ersten Position in die zweite Position drehbar ist.

3. Schrank nach Anspruch 2, wobei die Basisplatte (11) mit Löchern (27) angeordnet ist, um Ansätze (32) des Einsatzes (32) aufzunehmen, um die drehbare Verbindung zwischen der Basisplatte (11) und dem Einsatz (31) zu bilden.

4. Schrank nach einem der vorhergehenden Ansprüche, wobei der Verschlussarm (13) hin zur Verschlussposition und einer Position, um den Einsatz (31) in der zweiten Position zu halten, vorgespannt ist.

5. Schrank nach einem der vorhergehenden Ansprüche, wobei die Basisplatte (11) mit dem Verschlussarm (13) in einem einzelnen integrierten Stück aus Blechmetall gebildet ist.

6. Schrank nach einem der vorhergehenden Ansprüche, wobei die Basisplatte (11) einander gegenüberliegende Seitenflansche (17, 18) umfasst, die eine obere Kante aufweisen, um Vorsprünge (25) der Abdeckung (12) einzugreifen.

7. Schrank nach einem der vorhergehenden Ansprüche, wobei die Basisplatte (11) einen oberen Flansch (16) umfasst.

8. Schrank nach einem der vorhergehenden Ansprüche, wobei die Basisplatte (11) mit einer Dichtung (39 - 41) ausgestattet ist, um gegen die Abdeckung abzudichten (12).

9. Schrank nach einem der vorhergehenden Ansprüche, wobei die Abdeckung (12) abnehmbar an die Basisplatte (11) befestigt werden kann.

10. Schrank nach Anspruch 9, wobei die vordere Platte (21) und die Seitenwände (23, 24) der Abdeckung (12) einen Dichtungsflansch (26) umfassen, um den Einsatz (31) einzugreifen.

11. Schrank nach einem der vorhergehenden Ansprüche, wobei die Abdeckung (12) in einem einzigen integrierten Stück aus Blechmetall gebildet ist.

12. Schrank nach einem der vorhergehenden Ansprüche, wobei der Einsatz (31) einen Einsatzrahmen (35) und eine Kassette (36) umfasst, wobei die Kassette (36) mit Bezug auf den Einsatzrahmen (35) drehbar ist.

13. Verfahren zur Bedienung eines Schranks (10) nach Anspruch 1, umfassend eine Basisplatte (11), eine Abdeckung (12) und einen Einsatz (31), wobei die Abdeckung (12) mindestens in der geschlossenen Position des Schranks (10) mit der Basisplatte (11) verbunden ist, um einen Innenraum zur Aufnahme des Einsatzes (31) zu bilden, umfassend die folgenden Schritte:
a) Bewegen eines elastisch flexiblen Verschlussarms (13) der Basisplatte (11) von einer verschlossenen Position, in der er die Abdeckung (12) auf die Basisplatte (11) befestigt, in eine unverschlossene Position zu bewegen,
b) mindestens teilweises Entfernen der Abdeckung (12) von der Basisplatte (11),
c) Bewegen des Einsatzes (31) aus einer ersten Position zum Speichern innerhalb des Innenraums des Schranks (10) in eine vorstehende zweite Position, und
d) Veranlassen, dass der Verschlussarm (13) den Einsatz (31) eingreift, um den Einsatz (31) in der zweiten Position zu halten.

14. Verfahren nach Anspruch 13, umfassend die Schritte des Drehens des Einsatzes (31) aus der ersten Position in die zweite Position um eine drehbare Verbindung zwischen dem Einsatz (31) und der Basisplatte (11).

## Revendications

1. Armoire (10) comprenant une plaque de base (11), un insert (31) et un couvercle pouvant s'ouvrir (12), dans laquelle l'armoire (10) a une position ouverte et une position fermée, et dans laquelle le couvercle (12), au moins dans la position fermée de l'armoire (10), est raccordé à la plaque de base (11) pour former un espace intérieur afin de loger l'insert (31),
**caractérisée en ce que** :
la plaque de base (11) est agencée avec un bras de verrouillage flexible de manière résiliente (13) pour verrouiller le couvercle (12) sur la plaque de base (11) dans la position fermée de l'armoire (10), et
l'insert (31) est raccordé de manière mobile à la plaque de base (11), dans laquelle l'insert (31) est mobile d'une première position pour y stocker l'espace intérieur de l'armoire (10) à une seconde position en saillie lorsque l'armoire (10) est dans sa position ouverte, et dans laquelle le bras de verrouillage (13), dans la position ouverte de l'armoire (10), est agencé pour mettre l'insert (31) en prise, afin de maintenir l'insert dans la seconde position,
dans laquelle le couvercle (12) comprend une plaque avant (21), une paroi supérieure (22) et deux parois latérales (23, 24) opposées, dans laquelle le bras de verrouillage (13) est agencé pour s'étendre sur la paroi supérieure (22) et mettre en prise la plaque avant (21) dans la position fermée de l'armoire (10), et dans laquelle les parois latérales (23, 24), dans une extrémité à distance de la paroi supérieure (21), comprennent un crochet (30) pour mettre en prise la plaque de base (11).

2. Armoire selon la revendication 1, dans laquelle l'insert (31) est raccordé à la plaque de base (11) par le biais d'un raccordement rotatif, de sorte que l'insert (31) peut tourner de la première position à la seconde position.

3. Armoire selon la revendication 2, dans laquelle la plaque de base (11) est agencée avec des trous (27) pour recevoir des pattes (32) de l'insert (32) afin de former le raccordement rotatif entre la plaque de base (11) et l'insert (31).

4. Armoire selon l'une quelconque des revendications précédentes, dans laquelle le bras de verrouillage (13) est sollicité vers la position de verrouillage et une position pour maintenir l'insert (31) dans la seconde position.

5. Armoire selon l'une quelconque des revendications précédentes, dans laquelle la plaque de base (11) avec le bras de verrouillage (13) est formé avec une seule pièce intégrée de métal en feuille.

6. Armoire selon l'une quelconque des revendications précédentes, dans laquelle la plaque de base (11) comprend des brides latérales (17, 18) opposées ayant un bord supérieur pour mettre en prise des languettes (25) du couvercle (12).

7. Armoire selon l'une quelconque des revendications précédentes, dans laquelle la plaque de base (11) comprend une bride supérieure (16).

8. Armoire selon l'une quelconque des revendications précédentes, dans laquelle la plaque de base (11) est prévue avec un joint d'étanchéité (39-41) pour réaliser l'étanchéité contre le couvercle (12).

9. Armoire selon l'une quelconque des revendications précédentes, dans laquelle le couvercle (12) peut être fixé, de manière détachable, sur la plaque de base (11).

10. Armoire selon la revendication 9, dans laquelle la plaque avant (21) et les parois latérales (23, 24) du couvercle (12) comprennent une bride d'étanchéité (26) pour mettre en prise l'insert (31).

11. Armoire selon l'une quelconque des revendications précédentes, dans laquelle le couvercle (12) est formé avec une seule pièce intégrée de métal en feuille.

12. Armoire selon l'une quelconque des revendications précédentes, dans laquelle l'insert (31) comprend un bâti d'insert (35) et une cassette (36), dans laquelle la cassette (36) peut tourner par rapport au bâti d'insert (35).

13. Procédé pour actionner une armoire (10) selon la revendication 1, comprenant une plaque de base (11), un couvercle (12) et un insert (31), dans lequel le couvercle (12), au moins dans une position fermée de l'armoire (10), est raccordé à la plaque de base (11) pour former un espace intérieur afin de loger l'insert (31), comprenant les étapes consistant à :
a) déplacer un bras de verrouillage flexible de manière résiliente (13) de la plaque de base (11) d'une position verrouillée dans laquelle il verrouille le couvercle (12) sur la plaque de base (11) à une position déverrouillée,
b) retirer au moins partiellement le couvercle (12) de la plaque de base (11),
c) déplacer l'insert (31) d'une première position pour y stocker l'espace intérieur de l'armoire (10) dans une seconde position en saillie, et
d) amener le bras de verrouillage (13) à mettre en prise l'insert (31) afin de maintenir l'insert (31) dans la seconde position.

14. Procédé selon la revendication 13, comprenant les étapes consistant à faire tourner l'insert (31) de la première position à la seconde position autour d'un raccordement rotatif entre l'insert (31) et la plaque de base (11).
